(19) Europäisches Patentamt
European Patent Office
Office européen des brevets

(11) **EP 4 006 738 A1**

(12) **EUROPEAN PATENT APPLICATION**

(43) Date of publication:
**01.06.2022 Bulletin 2022/22**

(21) Application number: **20210760.3**

(22) Date of filing: **30.11.2020**

(51) International Patent Classification (IPC):
***G06F 16/22*** *(2019.01)*      ***G06F 16/901*** *(2019.01)*

(52) Cooperative Patent Classification (CPC):
**G06F 16/2246; G06F 16/9024**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **WANG, Jiao Jian**
**Nanjing, JiangSu, 210000 (CN)**

• **CHE, Xiao Yin**
**Beijing, 100097 (CN)**
• **LOH, Chang Wei**
**Suzhou, Jiangsu, 223200 (CN)**
• **QU, Ying**
**Beijing, 100121 (CN)**
• **SHENG, Ruo Gu**
**Beijing, 100102 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **DATA SEARCH METHOD, APPARATUS, AND SYSTEM**

(57) The present disclosure provides a data search method, apparatus, and system. Data samples in a data sample set are organized into a hierarchy of clusters. In the hierarchy of clusters, each node has a data sample cluster, a central data sample, and a cluster radius. The data sample cluster of each leaf node is composed of a single data sample. In addition, a non-leaf node in the hierarchy of clusters includes two downstream nodes, and a data sample cluster of each non-leaf node is a collection of data sample clusters of the two downstream nodes. After a search request including a first data sample is received, the hierarchy of clusters of the data sample set is traversed to search for similar data samples of the first data sample. By using the foregoing method, the data sample set is organized into a hierarchy of clusters, and the hierarchy of clusters is traversed to search for the similar data samples, so that the efficiency of the search for similar data samples can be improved

FIG. 3

EP 4 006 738 A1

## Description

## BACKGROUND

## Technical Field

The present disclosure generally relates to the field of data search, and in particular, to a data search method, a data search apparatus, and a data search system for searching a data sample set for similar data samples.

## Related Art

A data sample set is generally used for storing data samples, and is accessible to various application systems to perform various application processing. Examples of the various application systems may include a fault diagnosis system, a recommendation system, a search engine, and the like. A typical application of the data sample set is nearest neighbor search. That is, the data sample set is searched for data samples similar to a data sample in a search request.

A general method for searching for the similar data samples in the data sample set is to compare the data sample in the search request with each data sample in the data sample set, to obtain the similar data samples. Such a method is easily to be implemented, but the efficiency of the search is quite low in a case that there are generally massive data samples in a data sample set. Therefore, how to efficiently search a data sample set for similar data samples has become an urgent to-be-resolved problem.

## SUMMARY

In view of the above, the present disclosure provides a data search method, a data search apparatus, and a data search system. Similar data samples can be efficiently found in a data sample set by using the data search method, the data search apparatus, and the data search system.

According to one aspect of the present disclosure, a data search method for searching a data sample set for similar data samples is provided, characterized in that data samples in the data sample set are organized into a hierarchy of clusters, and the data search method includes: receiving a search request, the search request including a first data sample; and traversing the hierarchy of clusters in response to the search request, to search for similar data samples of the first data sample, where in the hierarchy of clusters, each node has a data sample cluster, a central data sample, and a cluster radius, the data sample cluster of each leaf node is composed of a single data sample, the central data sample of each node is a data sample corresponding to a smallest sum of similarity distances from other data samples in each node, the cluster radius of each node is a maximum similarity distance between the central data sample of each node and the other data samples, each non-leaf node includes two downstream nodes, and a data sample cluster of each non-leaf node is a collection of data sample clusters of the two downstream nodes.

By using the foregoing method, the data sample set is organized into a hierarchy of clusters, and the hierarchy of clusters is traversed to search for the similar data samples, so that the efficiency of the search for similar data samples can be improved.

Optionally, in an example of the foregoing aspect, the similar data samples include a first quantity of similar data samples, and the traversing the hierarchy of clusters to search for similar data samples of the first data sample includes: performing, until all the nodes of the hierarchy of clusters are traversed, the following processing process: updating, when a data sample quantity in a current search result set does not reach the first quantity, or a similarity distance between a central data sample of a current node to process and the first data sample is less than a first similarity distance of the current search result set, the current search result set by using the central data sample of the current node to process, the current search result set including all currently found similar data samples, the first similarity distance being the maximum similarity distance between any data sample in the current search result set and the first data sample; determining a first similarity distance of the updated current search result set; and determining a next node to process.

By using the foregoing method, a maximum capacity of the search result set is set to the first quantity of data samples, and each time a current node to process is visited, the current search result set is updated according to the data sample quantity in the current search result set and/or a similarity distance between a central data sample of the current node to process and the first data sample, so that data search can be more efficient and easier.

Optionally, in an example of the foregoing aspect, the updating, when a data sample quantity in a current search result set does not reach the first quantity, or a similarity distance between a central data sample of a current node to process and the first data sample is less than a first similarity distance, the current search result set by using the central data sample of the current node to process includes: adding the central data sample of the current node to process to the current search result set when the data sample quantity in the current search result set does not reach the first quantity; determining the similarity distance between the central data sample of the current node to process and the first data sample when the data sample quantity in the current search result set reaches the first quantity; and replacing the data sample that is at a maximum similarity distance from the first data sample and that is in the current search result set with the central data sample of the current node to process when the determined similarity distance is less than the first similarity distance.

Optionally, in an example of the foregoing aspect, the hierarchy of clusters of the data sample set is obtained through the following process: performing fully connected hierarchical clustering on all the data samples in the data sample set, to obtain each node of the hierarchy of clusters; and determining a central data sample and a cluster radius of each node of the hierarchy of clusters.

By using the foregoing method, clustering is performed on the data samples layer by layer by using a fully connected hierarchical clustering algorithm, so that the efficiency of clustering processing on the data sample set can be improved.

Optionally, in an example of the foregoing aspect, a cluster radius of a root node of the hierarchy of clusters is not determined when the central data sample and the cluster radius of each node of the hierarchy of clusters are determined.

By using the foregoing method, the cluster radius of the root node of the hierarchy of clusters is not determined when the hierarchy of clusters is organized, so that workload of organizing the hierarchy of clusters can be reduced. Thus, the efficiency of organizing the hierarchy of clusters of the data sample set is improved.

Optionally, in an example of the foregoing aspect, the determining a next node to process includes: determining the next node to process from the downstream nodes of the current node to process.

Optionally, in an example of the foregoing aspect, the determining the next node to process from the downstream nodes of the current node to process includes: determining a downstream node that has a central data sample at a shorter similarity distance from the first data sample and that is of two downstream nodes of the current node to process as the next node to process.

By using the foregoing method, a downstream node branch that is more similar to the first data sample and that is in the current node to process is preferentially visited, so that data samples similar to the first data sample can be quickly positioned. Thus, the efficiency of the search for data can be further improved.

Optionally, in an example of the foregoing aspect, the determining a next node to process includes: determining the next node to process from a first non-traversed node set when the data sample quantity in the current search result set reaches the first quantity, and the similarity distance between the central data sample of the current node to process and the first data sample is greater than a second similarity distance, the first non-traversed node set being composed of non-traversed nodes except non-traversed nodes on all downstream traverse paths of the current node to process, where the second similarity distance is a sum of the first similarity distance and a cluster radius of the current node to process.

By using the foregoing method, traversing the central data samples and all downstream paths of nodes having similarity distances, greater than the second similarity, to the first data sample is stopped when the data sample quantity reaches the first quantity in the current search result set, so that the search paths in the data search process can be reduced. Thus, the efficiency of the search is further improved.

Optionally, in an example of the foregoing aspect, the data sample set includes a knowledge base, and the data sample includes a knowledge point.

Optionally, in an example of the foregoing aspect, the data sample set is a measurement point data sample set of device failures in an industrial automation system, and the first data sample is a measurement point data sample of a current device failure.

According to another aspect of the present disclosure, a data search apparatus for searching a data sample set for similar data samples is provided, characterized in that data samples in the data sample set are organized into a hierarchy of clusters, and the data search apparatus includes: a search request receiving unit, configured to receive a search request, the search request including a first data sample; and a data search unit, configured to traverse the hierarchy of clusters in response to the search request, to search for a similar data sample of the first data sample, where in the hierarchy of clusters, each node has a data sample cluster, a central data sample, and a cluster radius, the data sample cluster of each leaf node is composed of a single data sample, the central data sample of each node is a data sample corresponding to a smallest sum of similarity distances from other data samples in each node, the cluster radius of each node is a maximum similarity distance between the central data sample of each node and the other data samples, each non-leaf node includes two downstream nodes, and a data sample cluster of each non-leaf node is a collection of data sample clusters of the two downstream nodes.

Optionally, in an example of the foregoing aspect, the data search unit includes: a research result updating module, configured to update, when a data sample quantity in a current search result set does not reach the first quantity, or a similarity distance between a central data sample of a current node to process and the first data sample is less than a first similarity distance of the current search result set, the current search result set by using the central data sample of the current node to process, the current search result set including all currently found similar data samples, the first similarity distance being the maximum similarity distance between any data sample in the current search result set and the first data sample; a similarity distance determining module, configured to determine a first similarity distance of the updated current search result set; and a node-to-process determining module, configured to determine a next node to process, where the research result updating module, the similarity distance determining module, and the node-to-process determining module cyclically perform operations until all the nodes of the hierarchy of clusters are traversed.

Optionally, in an example of the foregoing aspect, the node-to-process determining module is configured to determine the next node to process from the downstream nodes of the current node to process.

Optionally, in an example of the foregoing aspect, the node-to-process determining module is configured to determine a downstream node that has a central data sample at a shorter similarity distance from the first data sample and that is of two downstream nodes of the current node to process as the next node to process.

Optionally, in an example of the foregoing aspect, the node-to-process determining module is configured to determine the next current node to process from a first non-traversed node set when the data sample quantity in the current search result set reaches the first quantity, and the similarity distance between the central data sample of the current node to process and the first data sample is greater than a second similarity distance, the first non-traversed node set being composed of non-traversed nodes except non-traversed nodes on all downstream traverse paths of the current node to process, where the second similarity distance is a sum of the first similarity distance and a cluster radius of the current node to process.

According to another aspect of the present disclosure, a data search system for searching a data sample set for similar data samples is provided. The data search system includes a data sample processing apparatus, configured to organize data samples in the data sample set into a hierarchy of clusters, and the data search apparatus described above, where in the hierarchy of clusters, each node has a data sample cluster, a central data sample, and a cluster radius, the data sample cluster of each leaf node is composed of a single data sample, the central data sample of each node is a data sample corresponding to a smallest sum of similarity distances from other data samples in each node, the cluster radius of each node is a maximum similarity distance between the central data sample of each node and the other data samples, each non-leaf node includes two downstream nodes, and a data sample cluster of each non-leaf node is a collection of data sample clusters of the two downstream nodes.

According to another aspect of the disclosure, a computing device is provided. The computing device includes: at least one processor; and a memory coupled to the at least one processor, the memory being configured to store instructions, the instructions, when executed by the at least one processor, causing the at least one processor to perform the data search method described above.

According to another aspect of the disclosure, a machine-readable storage medium is provided. The non-transitory machine-readable storage medium stores executable instructions, when executed, causing a machine to perform the data search method described above.

According to another aspect of the disclosure, a computer program product is provided. The computer program product is tangibly stored on a computer-readable medium and includes computer-executable instructions that, when executed, causing at least processor to perform the data search method described above.

**BRIEF DESCRIPTION OF THE DRAWINGS**

The essence and advantages of the content of this specification can be further construed with reference to the following accompanying drawings. In the accompanying drawings, similar components or features may have the same reference numerals.

FIG. 1 is a system architecture diagram of a data search system for searching a data sample set for similar data samples according to an embodiment of the present disclosure.

FIG. 2 is an exemplary schematic diagram of a cluster tree organizing process of a data sample set according to an embodiment of the present disclosure.

FIG. 3 is an exemplary schematic diagram of a data sample set organized into a hierarchy of clusters according to an embodiment of the present disclosure.

FIG. 4 is an exemplary flowchart of a data search method for searching a data sample set for similar data samples according to an embodiment of the present disclosure.

FIG. 5 is a flowchart of an implementation example in a data search process according to an embodiment of the present disclosure.

FIG. 6 is an exemplary schematic diagram of a device failure diagnosis process in an industrial automation system according to an embodiment of the present disclosure.

FIG. 7 is a block diagram of an implementation example of a data search apparatus according to an embodiment of the present disclosure.

FIG. 8 is a block diagram of an implementation example of a data search unit according to an embodiment of the present disclosure.

FIG. 9 is a schematic diagram of a computing device for implementing a process of searching a data sample set for similar data samples according to an embodiment of the present disclosure.

REFERENCE NUMERALS

100 Data search system

110 Data sample processing apparatus

120 Data search apparatus

121 Search request receiving unit

123 Data search unit

125 Search result updating module

127 Similarity distance determining module

129 Node-to-process determining module

K1-K7 Data sample

C1-C6 Node of a hierarchy of clusters

410 Receive a search request

420 Data search process

421 Determine a similarity distance

422 When a data sample quantity in a current search result set is less than a first quantity or the data sample quantity in the current search result set reaches the first quantity, but a similarity distance between a central data sample of a current node to process and the first data sample is less than a first similarity distance

423 Update the current search result set

424 Determine a first similarity distance of the current search result set

425 Are there non-visited nodes?

426 Determine a next node to process

427 Output a search result set

610 Target device

620 Sensor

630 Measurement point data sample of a current device failure

640 Similar measurement point data sample search

650 Historical measurement point data sample base

650-1 to 650-n Historical measurement point data sample

600 Output a plurality of measurement point data samples similar to a current measurement point data sample

900 Computing device

910 Processor

920 Memory

930 Internal memory

940 Communication interface

960 Bus

DETAILED DESCRIPTION

A subject described in this specification is discussed now with reference to exemplary implementations. It should be understood that, discussion of these implementations is merely intended to make a person skilled in the art better understand and implement the subject described in this specification, and is not intended to limit the protection scope of the claims, the applicability, or examples. Changes may be made to the functions and arrangements of the discussed elements without departing from the protection scope of the content of this specification. Various processes or components may be omitted, replaced, or added in each example according to requirements. For example, the described method may be performed according to a sequence different from the sequence described herein, and steps may be added, omitted or combined. In addition, features described in some examples may also be combined in other examples.

As used in this specification, the term "include" and variants thereof represent open terms, and means "include but is not limited to". The term "based on" represents "at least partially based on". The terms "one embodiment" and "an embodiment" represent "at least one embodiment". The term "another embodiment" represents "at least one another embodiment". The terms "first", "second" and the like may represent different objects or the same object. Other definitions may be included explicitly or implicitly. Unless otherwise clearly specified, the definition of one term is consistent in the entire specification.

A data search method, a data search apparatus, and a data search system for searching a data sample set for similar data samples according to embodiments of the present disclosure are described below in detail with reference to the accompanying drawings.

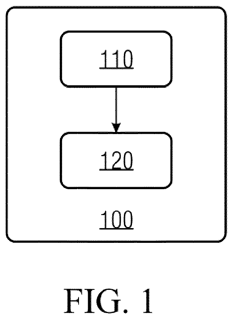

FIG. 1 is a system architecture diagram of a data search system 100 for searching a data sample set for similar data samples according to an embodiment of the present disclosure. As shown in FIG. 1, the data search system 100 includes a data sample processing apparatus 110 and a data search apparatus 120.

The data sample processing apparatus 110 is configured to organize data samples in the data sample set into a hierarchy of clusters. In the organized hierarchy of clusters, each node has a data sample cluster, a central data sample, and a cluster radius. The central data sample of each node is a data sample corresponding to a smallest sum of similarity distances from other data samples in each node. The cluster radius of each node is a maximum similarity distance between the central data sample of each node and the other data samples. In addition, the data sample cluster of each leaf node is composed of a single data sample. A central data sample of each leaf node is the single data sample, and has a cluster radius of 0. In addition, in the hierarchy of clusters, there are upstream and downstream relationships between nodes. Each non-leaf node includes two downstream nodes, and a data sample cluster of each non-leaf node is a collection of data sample clusters of the two downstream nodes.

In an example of the present disclosure, an example of the data sample may include a knowledge point such as a question and answer knowledge point. Correspondingly, the data sample set may be a knowledge base composed of a plurality of knowledge points. In another example of the present disclosure, an example of the data sample may include user feature data, commodity feature data, or the like. In another example of the present disclosure, an example of the data sample may be a measurement point data sample of a device failure in an industrial automation system, and the data sample set is a measurement point data sample set (a historical measurement point data sample base) of historical device failures.

In an example of the present disclosure, the data sample processing apparatus 110 may perform fully connected hierarchical clustering to obtain the hierarchy of clusters of the data sample set.

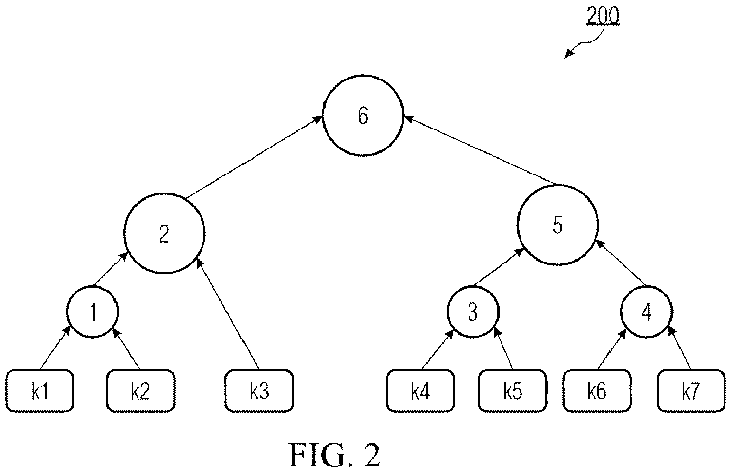

FIG. 2 is an exemplary schematic diagram of a cluster tree organizing process of a data sample set according to an embodiment of the present disclosure. In an example shown in FIG. 2, the data sample set includes seven data samples k1 to k7.

As shown in FIG. 2, when the data sample set is organized, each data sample is processed as a leaf node, and then node clustering is performed on the seven data samples k1 to k7 by using the fully connected hierarchical clustering, to obtain each node of the hierarchy of clusters. Specifically, the foregoing node clustering is implemented in iteration processes. In each iteration process, two closest nodes are selected from currently clustered nodes according to similarity distances between nodes for clustering and merging. Such an iteration process is performed until the nodes are clustered into one node. The similarity distance represents a similarity between two data samples and two nodes, and the similarity distance between nodes may be defined by using a maximum similarity distance between data samples of two nodes. In the present disclosure, examples of the similarity distance may include, but are not limited to, a Hamming distance, a Manhattan distance, a Euclidean distance, an angle cosine distance, and the like. In the present disclosure, a smaller similarity distance indicates a greater similarity. In addition, in an example, the similarity distance between nodes may be determined by using the following formula:

$$d(C1, C2) = \max_{x \in x1, C2) ic} d(x, y)$$

where, C1 and C2 represent two nodes, x represents a data sample in the node C1, and y represents a data sample in the node C2.

As shown in FIG. 2, when the fully connected hierarchical clustering is performed, after a first clustering iteration, the data samples k1 (which may also be referred to as a leaf node k1) and k2 (which may also be referred to as a leaf node k2) are clustered into a cluster C1 (a node C1). After a second clustering iteration, the node C1 and a leaf node k3 are cluster into a cluster C2 (a node C2). After a third clustering iteration, leaf nodes k4 and k5 are clustered into a cluster C3 (a node C3). After a fourth clustering iteration, leaf nodes k6 and k7 are clustered into a cluster C4 (a node C4). After a fifth clustering iteration, the nodes C3 and C4 are clustered into a cluster C5. After a sixth clustering iteration, the nodes C2 and C5 are clustered into a cluster C6 (a node C6). The node C6 may also be referred to as a root node.

A central data sample and a cluster radius of each node are determined after each node of the hierarchy of clusters is clustered above. For example, it is necessary to determine central data samples and cluster radiuses of the nodes C1 to C6. In addition, the data samples k1 to k7 are the leaf nodes of the hierarchy of clusters, central data samples of the leaf nodes are themselves, and cluster radiuses of the leaf nodes are 0. In addition, optionally, in an example, a cluster radius of a root node (for example, C6) of the hierarchy of clusters may not be determined.

In an example of the present disclosure, the central data sample of each node may be determined by using the following formula:

$$C^{\mu} = \operatorname*{argmin}_{x \in g} \sum_{y \in g} d(x, y)$$

where, $C^{\mu}$ is a central data sample of the node C, x is a data sample in the node C, y is all the data samples except the data sample x in the node C, and d(x, y) is a similarity distance between the data sample x and the data samples y.

In addition, in another example, the cluster radius of each node may be determined by using the following formula:

$$C^{\sigma} = \max_{x \in x} d\left(x, C^{\mu}\right)$$

where, $C^{\sigma}$ is a cluster radius of the node C, x is a data sample in the node C, $C^{\mu}$ is a central data sample of the node C, and $d(x,C^{\mu})$ is a similarity distance between the data sample x and the central data sample $C^{\mu}$.

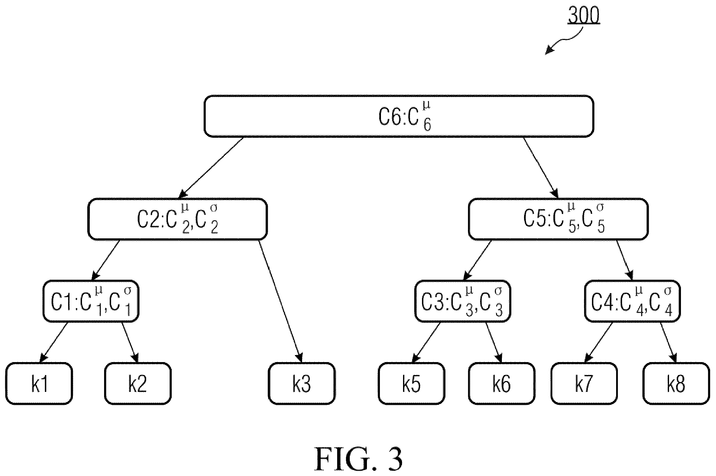

As shown in FIG. 3, the hierarchy of clusters of the data sample set may be obtained in the foregoing processing manner. In the hierarchy of clusters shown in FIG. 3, each node has a cluster. A cluster of a non-leaf node has a plurality of data samples. A cluster of a leaf node has only a single data sample. In addition, each node has a central data sample and a cluster radius. Optionally, in an example, a root node may have no cluster radius. For example, in an example in FIG. 3, a central data sample of the root node C6 is $C_6^{\mu}$, but the root node C6 has no cluster radius. The central data samples of the non-leaf nodes C1 to C5 are $C_1^{\mu}$ to $C_5^{\mu}$ respectively, and the cluster radiuses are $C_1^{\sigma}$ to $C_5^{\sigma}$ respectively. The data samples k1 to k7 are the leaf nodes of the hierarchy of clusters. Central data samples of the leaf nodes are themselves, and cluster radiuses of the leaf nodes are 0. The central data sample of each node is a data sample in the node.

After the hierarchy of clusters of the data sample set is obtained, the data search apparatus (120) traverses the hierarchy of clusters in response to a received search request, to search for a similar data sample of the first data sample in the received search request.

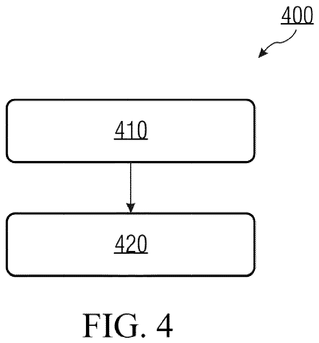

FIG. 4 is an exemplary flowchart of a data search method 400 for searching a data sample set for similar data samples according to an embodiment of the present disclosure. The data search method 400 is performed by the data search apparatus 120.

As shown in FIG. 4, in 410, a search request is received, the search request including a first data sample. In an example, the search request may be inputted by a user through an input terminal or an input interface of the data search apparatus 120.

Next, in 420, the hierarchy of clusters of the data sample set is traversed from a root node of the hierarchy of clusters to search for similar data samples of the first data sample. In an example, the foregoing traversing search may be to search for a first quantity of similar data samples of the first data sample. That is, a final search result includes the first quantity of similar data samples, for example, K similar data samples.

By using the data search method shown in FIG. 4, the data sample set is organized into the hierarchy of clusters described in FIG. 3, and the hierarchy of clusters is traversed to search for similar data samples, so that the efficiency of the search for similar data samples can be improved.

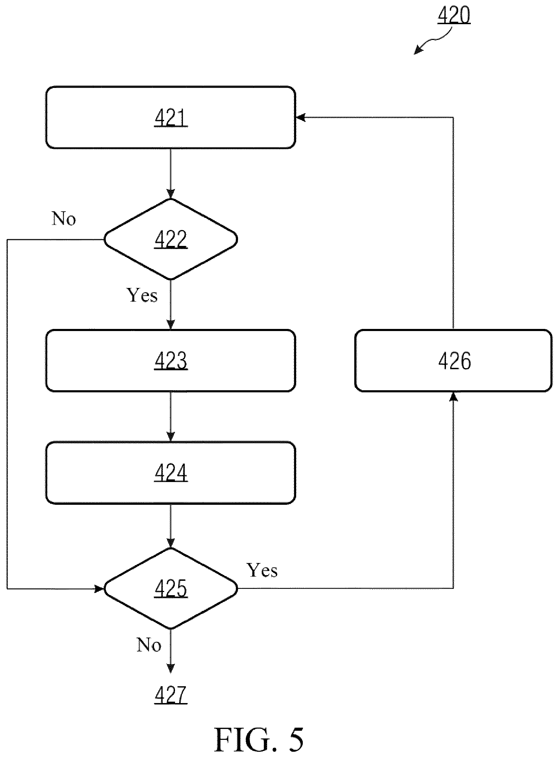

FIG. 5 is a flowchart of an implementation example in a data search process according to an embodiment of the present disclosure. In an example shown in FIG. 5, the data search operation is cyclically performed until all the nodes of the hierarchy of clusters are traversed. Operations 421 to 426 are performed on a visited current node (a current node to process).

Specifically, in 421, a similarity distance between a central data sample of the current node to process and the first data sample is determined.

In 422, whether a data sample quantity in a current search result set is less than a first quantity (for example, K) is determined, or when the data sample quantity in the current search result set reaches the first quantity, whether the similarity distance between the central data sample of the current node to process and the first data sample is less than a first similarity distance is determined. The current search result set is composed of all currently found similar data samples. The first similarity distance is the maximum similarity distance $d_M$ between any data sample in the current search result set and the first data sample. In an example, the first similarity distance $d_M$ may be determined by using the following formula:

$$d_M = \max_{x \in x} d(x, q)$$

where, q is the first data sample, m is the search result set, x is a data sample in the search result set.

If it is determined that the data sample quantity in the current search result set is less than a first quantity (for example, K), or when the data sample quantity in the current search result set reaches the first quantity, the similarity distance between the central data sample of the current node to process and the first data sample is less than the first similarity distance, in 423, the current search result set is updated by using the central data sample of a current node to process.

Specifically, if it is determined that the data sample quantity in the current search result set is less than the first quantity, in 423, the central data sample of the current node to process is added to the current search result set. Alternatively, when the data sample quantity in the current search result set reaches the first quantity, if it is determined that the similarity distance between the central data sample of the current node to process and the first data sample is less than the first similarity distance, in 423, the data sample that is at a maximum similarity distance from the first data sample and that is in the current search result set is replaced with the central data sample of the current node to process.

After the current search result set is updated as above, in 424, a first similarity distance of the current search result set is updated. That is, the maximum similarity distance between any data sample in the updated current search result set and the first data sample is determined as the updated first similarity distance $d_M$. Subsequently, the procedure proceeds to 425.

If it is determined in 422 that the data sample quantity in the current search result set reaches the first quantity and that the similarity distance between the central data sample of a current node to process and the first data sample is not less than the first similarity distance, the procedure proceeds to 425.

In 425, whether there are non-processed nodes during traverse is determined. When it is determined that there is no non-processed node during traverse, in 427, the current search result set is outputted as found similar data samples. Herein, processed nodes during traverse may include nodes that are determined as next nodes to process and nodes that are determined as nodes on which visit is given up.

When it is determined that there are non-processed nodes during traverse, in 426, a next node to process is determined, and then the procedure goes back to 421 to perform processing on the next node to process.

In an example, when the next node to process is determined, if there are downstream nodes in the current node to process, the next node to process is selected from the downstream nodes. Optionally, in an example, for the current node to process, a downstream node that has a central data sample at a shorter similarity distance from the first data sample and that is of two downstream nodes of the current node to process may be preferentially visited. For example, similarity distances between central data samples of the two downstream nodes of the current node to process and the first data sample may be determined, and then the downstream node that has a central data sample at a shorter similarity distance from the first data sample is determined as the next node to process.

In addition, optionally, in another example, when there are downstream nodes in the current node to process, if the data sample quantity in the current search result set reaches the first quantity, and the similarity distance between the central data sample of the current node to process and the first data sample is greater than a second similarity distance, the next node to process is determined from a first non-traversed node set. The first non-traversed node set is composed of non-traversed nodes except non-traversed nodes on all downstream traverse paths of the current node to process. That is, the non-traversed nodes on all the downstream traverse paths of the current node to process are removed from all non-traversed nodes in a current non-traversed path. In other words, searching for all downstream search paths of the current node to process is canceled. That is, direct downstream nodes and indirect downstream nodes of the current node to process are no longer searched for. Further, an unprocessed node not belonging to the downstream search paths of the current node to process is selected to be the next current node to process. The second similarity distance is a sum of the first similarity distance $d_M$ and a cluster radius $C^\sigma$ of the current node to process, that is, $C^\sigma + d_M$.

For example, as shown in FIG. 3, it is assumed that the current node to process is C2, and the nodes C3 to C5 are non-traversed nodes. In the example in FIG. 3, the nodes C1 and k3 are direct downstream nodes of the node C2, and the nodes k1 and k2 are indirect downstream nodes of the node C2. If a similarity distance between a central data sample of the node C2 and the first data sample is greater than the second similarity distance, searching for the node C1 and nodes k1 to k3 is canceled, and the node C5 are selected to be the next node to process.

It should be noted here that, a method of determining the next node to process in the example may be used in combination with the method for processing the downstream nodes described above. For example, if the data sample quantity in the current search result set does not reach the first quantity or if the data sample quantity in the current search result set reaches the first quantity, but the similarity distance between the central data sample of the current node to process and the first data sample is not greater than the second similarity distance, the next node to process may be selected from the downstream nodes of the current node to process. In addition, optionally, when the next node to process is selected from the downstream nodes of the current node to process, a downstream node that has a central data sample at a shorter similarity distance from the first data sample may be determined as the next node to process.

In the data search processing process shown in FIG. 5, a maximum capacity of the search result set is set to the first quantity of data samples, and each time a current node to process is visited, the current search result set is updated according to the data sample quantity in the current search result set and/or a similarity distance between a central data sample of the current node to process and the first data sample. Thus, the efficiency of the search for similar data samples is improved, and the search complexity is reduced.

In the search processing process shown in FIG. 5, when the data sample quantity in the current search result set reaches the first quantity, nodes having samples that are impossible to be more similar to the first data sample than the data samples in the current search result set are determined by using a triangle inequality and searching for all the downstream paths of determined nodes is canceled, so that the search paths of the data search can be reduced. Thus, the efficiency of the search for data is further improved.

In the search processing process shown in FIG.

5, a downstream node branch that is more similar to the first data sample and that is in the current node to process is preferentially found, so that data samples similar to the first data sample can be quickly positioned. Thus, the efficiency of the search for data is further improved.

In addition, it should be noted that the example shown in FIG. 5 is only an implementation example of the data search process. In other embodiments of the present disclosure, some of steps or operations shown in FIG. 5 may not be included. In addition, optionally, in other examples of the present disclosure, the similar data samples in the hierarchy of clusters may alternatively be found by using other proper data search methods (algorithms) in the art.

The foregoing data search process may be applied to device failure diagnosis processing (that is, applied to a device failure diagnosis system) of the industrial automation system. In an application example of the device failure diagnosis processing, the data sample set is a measurement point data sample set of device failures in the industrial automation system, and the first data sample is a measurement point data sample of a current device failure.

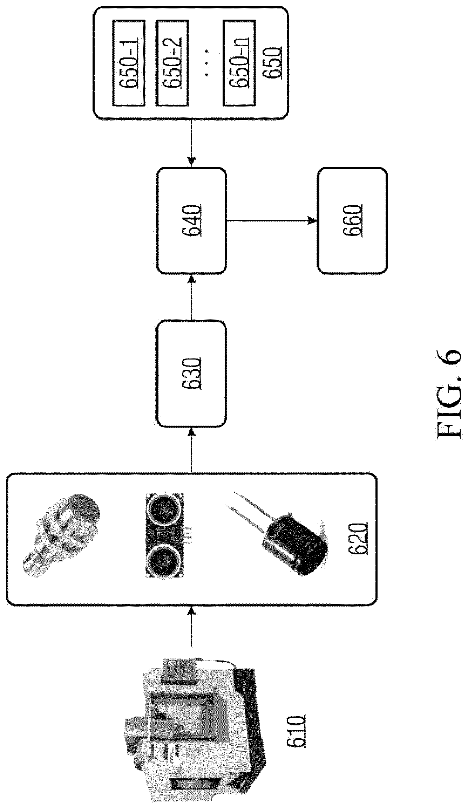

FIG. 6 is an exemplary schematic diagram of a device failure diagnosis process in an industrial automation system according to an embodiment of the present disclosure.

As shown in FIG. 6, when a target device 610 fails, a measurement point data sample (the first data sample) 630 of a current device failure of the target device 610 is sensed through a sensor 620. Then, a similar data sample search request is generated based on the measurement point data sample 630 of the current device failure, and similar data sample searching 640 is performed in a historical measurement point data sample base 650 by using the generated similar data sample search request, to obtain and output one or more similar data samples 660 similar to the current device failure as a failure diagnosis basis. The historical measurement point data sample base 650 includes measurement point data samples 650-1 to 650-n of a plurality of historical device failures. The measurement point data samples in the historical measurement point data sample base 650 are organized into the foregoing hierarchy of clusters. An historical measurement point data sample may also be referred to as a historical case. A historical measurement point data sample (a case data sample) includes measurement point data (for example, a voltage, a current, a temperature, a pressure) within a time period when a device failure occurs, and textual description of a failure phenomenon.

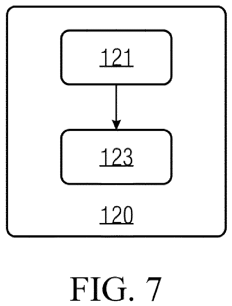

FIG. 7 is a block diagram of an implementation example of a data search apparatus 120 according to an embodiment of the present disclosure. As shown in FIG. 7, the data search apparatus 120 includes a search request receiving unit 121 and a data search unit 123.

The search request receiving unit 121 is configured to receive a search request. The search request includes a first data sample.

The data search unit 123 is configured to traverse the hierarchy of clusters in response to the search request, to search for similar data samples of the first data sample. In the present disclosure, data samples in a data sample set are organized into a hierarchy of clusters. In the organized hierarchy of clusters, each node has a data sample cluster, a central data sample, and a cluster radius. The central data sample of each node is a data sample corresponding to a smallest sum of similarity distances from other data samples in each node, and the cluster radius of each node is a maximum similarity distance between the central data sample of each node and the other data samples. In addition, the data sample cluster of each leaf node is composed of a single data sample. A central data sample of each leaf node is the single data sample, and a cluster radius of the leaf node is 0. In addition, in the hierarchy of clusters, there are upstream and downstream relationships between nodes. Each non-leaf node includes two downstream nodes, and a data sample cluster of each non-leaf node is a collection of data sample clusters of the two downstream nodes.

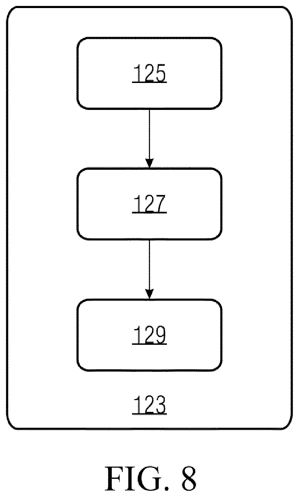

FIG. 8 is a block diagram of an implementation example of a data search unit 123 according to an embodiment of the present disclosure. As shown in FIG. 8, the data search unit 123 includes a search result updating module 125, a similarity distance updating module 127, and a node-to-process determining module 129. The search result updating module 125, the similarity distance determining module 127, and the node-to-process determining module 129 cyclically perform operations until all the nodes of the hierarchy of clusters are traversed.

Specifically, the search result updating module 125 is configured to update, when a data sample quantity in a current search result set does not reach the first quantity, or a similarity distance between a central data sample of a current node to process and the first data sample is less than a first similarity distance of the current search result set, the current search result set by using the central data sample of the current node to process. The current search result set includes all currently found similar data samples, and the first similarity distance is the maximum similarity distance between any data sample in the current search result set and the first data sample. Optionally, in an example, the search result updating module 125 may be configured to add the central data sample of the current node to process to the current search result set when the data sample quantity in the current search result set does not reach the first quantity; determine the similarity distance between the central data sample of the current node to process and the first data sample when the data sample quantity in the current search result set reaches the first quantity; and replace the data sample that is at a maximum similarity distance from the first data sample and that is in the current search result set with the central data sample of the current node to process when the determined similarity distance is less than the first similarity distance. Otherwise, the current search result set is not updated.

The similarity distance determining module 127 determines a first similarity distance of the updated current search result set after the current search result set is updated. Then, the node-to-process determining module 129 determines a next node to process.

Optionally, in an example, the node-to-process determining module 129 is configured to determine the next node to process from the downstream nodes of the current node to process. In another example, when the next node to process is determined from the downstream nodes of the current node to process, the node-to-process determining module 129 may be configured to determine a downstream node that has a central data sample at a shorter similarity distance from the first data sample and that is of two downstream nodes of the current node to process as the next node to process.

In addition, optionally, in an example, the node-to-process determining module 129 may be configured to determine the next node to process from a first non-traversed node set when a data sample quantity in a current search result set reaches the first quantity and the similarity distance between the central data sample of the current node to process and the first data sample is greater than a second similarity distance. The first non-traversed node set is composed of non-traversed nodes except non-traversed nodes on all downstream traverse paths of the current node to process. The second similarity distance is a sum of the first similarity distance and a cluster radius of the current node to process.

The data search method and the data search apparatus according to the present disclosure are described with reference to FIG. 1 to FIG. 8 above. The data search apparatus may be implemented by hardware, or may be implemented by software or a combination of hardware and software.

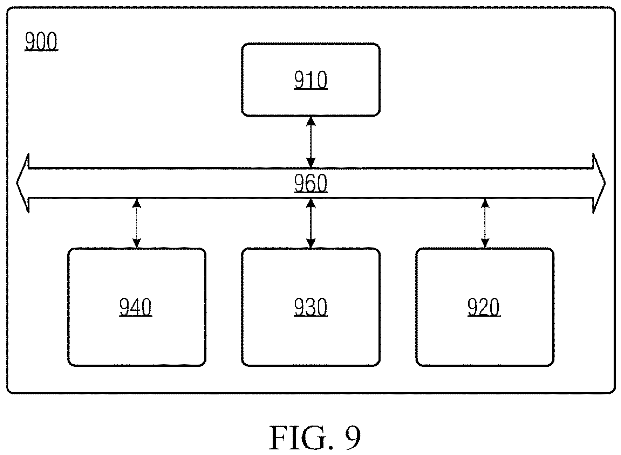

FIG. 9 is a schematic diagram of a computing device 900 for implementing a process of searching a data sample set for similar data samples according to an embodiment of the present disclosure. As shown in FIG. 9, the computing device 900 may include at least one processor 910, a memory (for example, a non-volatile memory) 920, an internal memory 930, and a communication interface 940, and the at least one processor 910, the memory 920, the internal memory 930, and the communication interface 940 are connected through a bus 960. The at least one processor 910 executes at least one computer-readable instruction (that is, the foregoing elements implemented in the form of software) stored or encoded in the memory.

In an embodiment, computer-executable instructions are stored in the memory. The computer-executable instructions, when executed, cause the at least one processor 910 to: receive a search request, the search request including a first data sample; and traverse a hierarchy of clusters of a data sample set in response to the search request, to search for similar data samples of the first data sample, where in the hierarchy of clusters of the data sample set, each node has a data sample cluster, a central data sample, and a cluster radius, the central data sample of each node is a data sample corresponding to a smallest sum of similarity distances from other data samples in each node, the cluster radius of each node is a maximum similarity distance between the central data sample of each node and the other data samples, the data sample cluster of each leaf node is composed of a single data sample, each non-leaf node includes two downstream nodes, and a data sample cluster of each non-leaf node is a collection of data sample clusters of the two downstream nodes.

It should be understood that, the computer-executable instructions stored in the memory, when executed, cause the at least one processor 910 to perform the various operations and functions described in the foregoing embodiments of this specification with reference to FIG. 1 to FIG. 8.

According to an embodiment, a program product of, for example, a machine-readable medium (for example, a non-transitory machine-readable medium) is provided. The machine-readable medium may be provided with instructions (that is, the foregoing elements implemented in the form of software), and the instructions, when executed by a machine, cause the machine to perform the various operations and functions described in the foregoing embodiments of this specification with reference to FIG. 1 to FIG. 8. Specifically, a system or an apparatus provided with a readable storage medium may be provided. The readable storage medium stores software program code that implements functions of any one of the foregoing embodiments, and a computer or processor of the system or the apparatus is enabled to read and execute instructions stored in the readable storage medium.

In this case, program code read from the readable medium can implement the functions in any one of the foregoing embodiments, and therefore the machine-readable code and the readable storage medium for storing the machine-readable code constitute a part of the present invention.

Examples of the readable storage medium includes a floppy disk, a hard disk, a magnetooptical disk, an optical disk (for example, a CD-ROM, a CD-R, a CD-RW, a DVD-ROM, a DVD-RAM, a DVD-RW, or a DVD-RW), a magnetic tape, a non-volatile storage card, and a ROM. Optionally, the program code may be downloaded from a server computer or a cloud by using a communication network.

Those skilled in the art should understand that the various embodiments disclosed above may be modified and changed without departing from the essence of the invention. Therefore, the protection scope of the present invention should be subject to the appended claims.

It should be noted that not all steps and units in the procedures and the diagrams of the system structures are necessary, and some steps or units may be omitted according to an actual requirement. An execution sequence of the steps is not fixed and may be adjusted according to a requirement. The apparatus structure described in the embodiments may be a physical structure or a logical structure. That is, some units may be implemented by the same physical entity, or some units may be implemented by a plurality of physical entities, or may be implemented by some components in a plurality of independent devices together.

In the embodiments, the hardware units or modules may be implemented mechanically or electrically. For example, a hardware unit, module, or processor may include a permanent dedicated circuit or logic (for example, a dedicated processor, FPGA or ASIC) to complete a corresponding operation. The hardware unit or processor may further include programmable logic or a circuit (for example a general-purpose processor or another programmable processor), which may be temporarily set by software to complete a corresponding operation. A specific implementation (a mechanical manner, a dedicated permanent circuit, or a temporarily set circuit) may be determined based on costs and time considerations.

Exemplary embodiments are described above in combination with specific implementations illustrated in the accompanying drawings, but this does not represent all embodiments that may be implemented or fall within the protection scope of the claims. A term "exemplary" used in the entire specification means "used as an example, an instance, or an illustration", and does not mean "preferred" or "superior" over other embodiments. To provide an understanding of the described technologies, the specific implementations include specific details. However, these technologies may be implemented without these specific details. In some embodiments, to avoid confusing the concept of the described embodiments, a well-known structure and apparatus are shown in a block diagram form.

The descriptions of the content of the present disclosure are provided to allow any person of ordinary skill in the art to implement or use the content of the present disclosure. For a person of ordinary skill in the art, various modifications on the content of the present disclosure are obvious. In addition, a general principle defined in this specification may be applied to other variants without departing from the protection scope of the content of the present disclosure. Therefore, the content of the present disclosure is not limited to the examples and designs described in this specification, but is consistent with the widest range conforming to the principle and novelty disclosed in this specification.

## Claims

1. A data search method (400) for searching a data sample set for similar data samples, **characterized in that** data samples in the data sample set are organized into a hierarchy of clusters, and the data search method (400) comprises:

   receiving (410) a search request, the search request comprising a first data sample; and
   traversing (420) the hierarchy of clusters in response to the search request, to search for similar data samples of the first data sample, wherein
   in the hierarchy of clusters, each node has a data sample cluster, a central data sample, and a cluster radius, the data sample cluster of each leaf node is composed of a single data sample, the central data sample of each node is a data sample corresponding to a smallest sum of similarity distances from other data samples in each node, and the cluster radius of each node is a maximum similarity distance between the central data sample of each node and the other data samples,
   each non-leaf node comprises two downstream nodes, and a data sample cluster of each non-leaf node is a collection of data sample clusters of the two downstream nodes.

2. The data search method of claim 1, **characterized in that** the similar data samples comprise a first quantity of similar data samples, and the traversing (420) the hierarchy of clusters to search for similar data samples of the first data sample comprises:
   performing, until all the nodes of the hierarchy of clusters are traversed, the following processing process:

   updating (423), when a data sample quantity in a current search result set does not reach the first quantity, or a similarity distance between a central data sample of a current node to process and the first data sample is less than a first similarity distance of the current search result set, the current search result set by using the central data sample of the current node to process, the current search result set comprising all currently found similar data samples, the first similarity distance being the maximum similarity distance between any data sample in the current search result set and the first data sample;
   determining (424) a first similarity distance of the updated current search result set; and
   determining (426) a next node to process.

3. The data search method (400) of claim 2, **characterized in that** the updating (423), when a data sample quantity in a current search result set does not reach the first quantity, or a similarity distance between a central data sample of a current node to process and the first data sample is less than a first similarity distance, the current search result set by using the central data sample of the current node to process comprises:

adding the central data sample of the current node to process to the current search result set when the data sample quantity in the current search result set does not reach the first quantity;

determining the similarity distance between the central data sample of the current node to process and the first data sample when the data sample quantity in the current search result set reaches the first quantity; and

replacing the data sample that is at a maximum similarity distance from the first data sample and that is in the current search result set with the central data sample of the current node to process when the determined similarity distance is less than the first similarity distance.

4.  The data search method (400) of claim 1, **characterized in that** the hierarchy of clusters of the data sample set is obtained through the following process:

performing fully connected hierarchical clustering on all the data samples in the data sample set, to obtain each node of the hierarchy of clusters; and

determining a central data sample and a cluster radius of each node of the hierarchy of clusters.

5.  The data search method (400) of claim 4, **characterized in that** a cluster radius of a root node of the hierarchy of clusters is not determined when the central data sample and the cluster radius of each node of the hierarchy of clusters are determined.

6.  The data search method (400) of claim 2, wherein the determining (426) a next node to process comprises:
determining the next node to process from the downstream nodes of the current node to process.

7.  The data search method (400) of claim 6, **characterized in that** the determining the next node to process from the downstream nodes of the current node to process comprises:
determining a downstream node that has a central data sample at a shorter similarity distance from the first data sample and that is of two downstream nodes of the current node to process as the next node to process.

8.  The data search method (400) of claim 2, **characterized in that** the determining (426) a next node to process comprises:

determining the next node to process from a first non-traversed node set when the data sample quantity in the current search result set reaches the first quantity, and the similarity distance between the central data sample of the current node to process and the first data sample is greater than a second similarity distance, the first non-traversed node set being composed of non-traversed nodes except non-traversed nodes on all downstream traverse paths of the current node to process, wherein

the second similarity distance is a sum of the first similarity distance and a cluster radius of the current node to process.

9.  The data search method (400) of claim 1, **characterized in that** the data sample set comprises a knowledge base, and the data sample comprises a knowledge point.

10. The data search method (400) of claim 1, **characterized in that** the data sample set is a measurement point data sample set of device failures in an industrial automation system, and the first data sample is a measurement point data sample of a current device failure.

11. A data search apparatus (120) for searching a data sample set for similar data samples, **characterized in that** data samples in the data sample set are organized into a hierarchy of clusters, and the data search apparatus (120) comprises:

a search request receiving unit (121), configured to receive a search request, the search request comprising a first data sample; and
a data search unit (123), configured to traverse the hierarchy of clusters in response to the search request, to search for similar data samples of the first data sample, wherein
in the hierarchy of clusters, each node has a data sample cluster, a central data sample, and a cluster radius, the data sample cluster of each leaf node is composed of a single data sample, the central data sample of each node is a data sample corresponding to a smallest sum of similarity distances from other data samples in each node, and the cluster radius of each node is a maximum similarity distance between the central data sample of each node and the other data samples,
each non-leaf node comprises two downstream nodes, and a data sample cluster of each non-leaf node is a collection of data sample clusters of the two downstream nodes.

12. The data search apparatus (120) of claim 11, **characterized in that** the data search unit (123) comprises:

a search result updating module (125), configured to update, when a data sample quantity in a current search result set does not reach the first quantity, or a similarity distance between a central data sample of a current node to process and the first data sample is less than a first similarity distance of the current search result set, the current search result set by using the central data sample of the current node to process, the current search result set comprising all currently found similar data samples, the first similarity distance being the maximum similarity distance between any data sample in the current search result set and the first data sample;

a similarity distance determining module (127), configured to determine a first similarity distance of the updated current search result set; and

a node-to-process determining module (129), configured to determine a next node to process, wherein

the search result updating module, the similarity distance determining module, and the node-to-process determining module cyclically perform operations until all the nodes of the hierarchy of clusters are traversed.

13. The data search apparatus (120) of claim 12, **characterized in that** the node-to-process determining module (129) is configured to:
determining the next node to process from the downstream nodes of the current node to process.

14. The data search apparatus (120) of claim 13, **characterized in that** the node-to-process determining module (129) is configured to:
determining a downstream node that has a central data sample at a shorter similarity distance from the first data sample and that is of two downstream nodes of the current node to process as the next node to process.

15. The data search apparatus (120) of claim 12, **characterized in that** the node-to-process determining module (129) is configured to:

determining the next node to process from a first non-traversed node set when the data sample quantity in the current search result set reaches the first quantity, and the similarity distance between the central data sample of the current node to process and the first data sample is greater than a second similarity distance, the first non-traversed node set being composed of non-traversed nodes except non-traversed nodes on all downstream traverse paths of the current node to process, wherein
the second similarity distance is a sum of the first similarity distance and a cluster radius of the current node to process.

16. A data search system (100) for searching a data sample set for similar data samples, comprising:

a data sample processing apparatus (110), configured to organize data samples in the data sample set into a hierarchy of clusters, and the data search apparatus (120) of any one of claims 11 to 15, wherein
in the hierarchy of clusters, each node has a data sample cluster, a central data sample, and a cluster radius, the data sample cluster of each leaf node is composed of a single data sample, the central data sample of each node is a data sample having a minimum sum of similarity distances to other data samples in the node, and the cluster radius of each node is a maximum similarity distance between the central data sample of the node and the other data samples, each non-leaf node comprises two downstream nodes, and a data sample cluster of each non-leaf node is a collection of data sample clusters of the two downstream nodes.

17. The data search system (100) of claim 16, **characterized in that** the data sample processing apparatus (110) is configured to perform fully connected hierarchical clustering on all the data samples in the data sample set, to obtain each node of the hierarchy of clusters; and determine a central data sample and a cluster radius of each node.

18. A computing device (900), comprising:

at least one processor (910); and
a memory (920) coupled to the at least one processor (910), the memory being configured to store instructions, the instructions, when executed by the at least one processor (920), causing the at least one processor to perform the method of any one of claims 1 to 10.

19. A machine-readable storage medium storing executable instructions, the instructions, when executed, causing a machine to perform the method of any one of claims 1 to 10.

20. A computer program product tangibly stored on a computer-readable medium and comprising computer-executable instructions, the computer-executable instructions, when executed, causing at least one processor to perform the method of any one of claims 1 to 10.

FIG. 1

FIG. 2

EP 4 006 738 A1

300

$C6:C_6^{\mu}$

$C2:C_2^{\mu},C_2^{\sigma}$

$C5:C_5^{\mu},C_5^{\sigma}$

$C1:C_1^{\mu},C_1^{\sigma}$

$C3:C_3^{\mu},C_3^{\sigma}$

$C4:C_4^{\mu},C_4^{\sigma}$

k1  k2  k3  k5  k6  k7  k8

FIG. 3

400

410

420

FIG. 4

FIG. 5

FIG. 6

FIG. 7

FIG. 8

FIG. 9

Europäisches
Patentamt

European
Patent Office

Office européen
des brevets

## EUROPEAN SEARCH REPORT

Application Number

EP 20 21 0760

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/151535 A1 (DUSBERGER DARIUSZ [US] ET AL) 13 June 2013 (2013-06-13)<br>* abstract; figures 4A,4B,6B *<br>* paragraph [0064] - paragraph [0066] *<br>* paragraph [0069] - paragraph [0072] *<br>----- | 1-20 | INV.<br>G06F16/22<br>G06F16/901 |
| X | US 6 289 354 B1 (AGGARWAL CHARU CHANDRA [US] ET AL) 11 September 2001 (2001-09-11)<br>* abstract; figure 7 *<br>* column 13, line 5 - line 55 *<br>* page 7; figure 7 *<br>----- | 1-20 | |
| A | US 2019/303357 A1 (AUVENSHINE JOHN J [US] ET AL) 3 October 2019 (2019-10-03)<br>* abstract *<br>* paragraph [0143] - paragraph [0145] *<br>* figures 5-6 *<br>----- | 1-20 | |

TECHNICAL FIELDS
SEARCHED      (IPC)

G06F

The present search report has been drawn up for all claims

| Place of search | Date of completion of the search | Examiner |
|---|---|---|
| Berlin | 6 May 2021 | Nazzaro, Antonio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 21 0760

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2021

| Patent document cited in search report | | Publication date | Patent family member(s) | | Publication date |
|---|---|---|---|---|---|
| US 2013151535 | A1 | 13-06-2013 | NONE | | |
| US 6289354 | B1 | 11-09-2001 | NONE | | |
| US 2019303357 | A1 | 03-10-2019 | US 2018103084 A1 | | 12-04-2018 |
| | | | US 2019303357 A1 | | 03-10-2019 |

EPO FORM P0459

For more details about this annex : see Official Journal of the European Patent Office, No. 12/82